# EUROPEAN PATENT APPLICATION

(11) **EP 0 919 419 A1**
(43) Date of publication of application: **02.06.1999**
(21) Application number: 98309518.3
(22) Date of filing: 20.11.1998
(51) Int. Cl.: B60K 31/00, F02D 41/02

(54) **Remote cooperative engine control with remote data processing**

(30) Priority: 28.11.1997 US 980331
(71) Applicant: International Business Machines Corporation, Armonk, N.Y. 10504 (US)
(72) Inventor: Trepp, Robert Martin, Mahopac, NY 10541 (US)
(74) Representative: Moss, Robert Douglas

(57) **Abstract**

An apparatus and method for controlling the engine performance of a plurality of automobiles or motor vehicles is described incorporating a remote data processing resource, a data network, a first transmitter, a first receiver, and motor vehicles having an engine controller responsive to control signals from the data network via a second receiver and from an operator in the vehicle. The invention overcomes the problem of adapting engine control to various operating conditions to optimize engine performance for speed, fuel economy and reduced emissions to comply with emission standards.

## Description

### Field of the Invention

This invention relates to the control of one or more motor vehicles and more particularly to optimum engine performance under varied conditions by cooperative engine control via an operator in the vehicle and a data network such as the internet or world wide Web coupled to one or more remote data processors for generating control signals according to certain objectives taking into account a multitude of factors.

### Background of the Invention

Motor vehicles such as automobiles, trucks, vans and recreation vehicles operate under a wide range of conditions. For example, engines of motor vehicles in the same town may have different starting temperatures depending on whether the motor vehicle is parked on the street or housed in a heated garage. Further, the motor vehicle is driven in the local area having an ambient temperature and pressure which may effect the air/fuel mixture. Another variation of operating conditions is the driver preference for air conditioning, acceleration, deceleration and speed which affects engine load. Another variation of operating conditions is the altitude, terrain, and location of the motor vehicle with respect to features of the terrain such as whether the motor vehicle is headed or moving up hill or down hill and its speed.

Another variation is the emission standards imposed on motor vehicles by a city, county, state or federal government or agency. Emission standards may be a function of the geographic location or county of the motor vehicle for example the city of Los Angeles, California versus a rural area such as Willow Creek, California or Westchester County versus Ulster County in New York. Current engines of motor vehicles have substantially fixed electronic engine control with respect to these conditions for the generation of timing signals, advance/retard, air fuel mixture etc. and do not adapt the control of the engine to variable conditions. These variable conditions may be air conditioning, geographic jurisdiction, terrain to optimize power, speed, fuel economy and/or minimize unwanted emissions.

In a publication by A.J. Caristi entitled "Build The Smartbox", Electronics Now, July 1997, pp. 25-29 and 49, a smart box is described which helps synchronize the air conditioning compressor with the load demand on the engine. The smart box operates so that the compressor is off when accelerating and on when coasting or braking. The variation in engine vacuum is used to directly measure how hard the engine is working which is accomplished by a circuit in the smart box.

Further, it is possible to vary and improve engine performance in an existing manufactured car by recalibrating the programmable read-only memory (PROM) of the engine control system such as in a General Motors motor vehicle. Such a recalibration has been described in a publication by J. Hartman entitled "Barriers to Entry, Hacking GM's On-Board Computers", Hot Rod, June 1997, pp. 74, 76, 78 and 79.

Motor vehicles are presently manufactured with some integrated circuit chips in the vehicle away from the engine due to the temperature and uncleanliness in the engine compartment. Never-the-less, the ambient temperature excursions experienced by a vehicle parked outside can run from -50°F (Montana) to 130°F and more typically from 0°F to 100°F. Data processing equipment on board a motor vehicle would therefore experience wide temperature excursions, temperature cycling and transients, dust, moisture, salt atmosphere and dirt as well as mechanical shock and vibration during normal operation.

In the Gannett Newspapers, Sunday, 24 August 1997, page 12A, a graph from the Environmental Protection Agency shows air pollution approaching unhealthy levels over regions of New York, Connecticut and Massachusetts for the second week of August 1997. "Smog, or ozone, is formed when nitrogen oxides and substances called volatile organic compounds from automobiles and factories combine in the air with heat and sunlight." "The smog drifts to the north and east with the prevailing weather patterns." The air pollution as shown in the graph covers many square miles and is not neatly contained in certain counties but is drifting.

In the Gannett Newspapers, Monday, 22 September 1997, page 3B, an article by C.J. Hanley entitled "A Climate for Change" recites "Fuel combustion - in engines powering everything from automobiles to electricity plants - is the biggest man-made source of carbon dioxide and nitrous oxide." A graph by W.W. Norton and Company in the article, contains the legends "Automobile Production", "Cars are responsible for more than 15 percent of greenhouse gases," and "World production of cars in millions." A curve shows that from 1950 to 1990, world car production increased steadily from about 8 million to 35 million cars per year. The curve shows that world production levelled off to the rate of 35 million cars per year from 1990 to 1997.

Therefore the above-mentioned prior art systems which include engine control computing resources on-board the motor vehicle are disadvantageous in many respects. For example, the on-board computer resources are negatively affected by local conditions around the vehicle, as described above. Further, on-board computer resources are expensive and require duplication in each vehicle.

### Summary of the Invention

In accordance with two aspects of the present invention, an apparatus (as claimed in claim 1) and method (as claimed in claim 11) for cooperatively controlling the engine performance of one or more motor vehicles having respective engines is provided. The motor vehicle may preferably include means for determining its position such as by a global positioning system to report its position via the claimed first data signals. The motor vehicle may preferably also include an identification code to be included as part of the first data signals and first control signals. The motor vehicle may also include means for reporting its velocity and other parameters via first data signals.

The invention preferably further includes a data processing resource responsive to second data signals from third persons outside of the motor vehicle cooperatively controlled for over-riding the operator and indicating certain desired engine performance such as velocity, acceleration, torque etc. The data processing resource may also provide to third persons outside of the motor vehicle cooperatively controlled data with respect to the position of the motor vehicle, if reported, and engine data such as its velocity and acceleration history.

Other aspects of the invention are recited in independent claims 9 and 10.

Thus, the remote control system of the present invention provides much better and much more flexible control of the one or more motor vehicles as compared to the prior art on-board system. Further, the remote control system allows a reduction in costs due to the lower costs of remote computing.

### Brief Description of the Drawings

These and other features, objects, and advantages of the present invention will become apparent upon consideration of the following detailed description of the invention when read in conjunction with the drawing in which:
Fig. 1 shows one embodiment of the invention;
Fig. 2 shows a block diagram of components positioned in a motor vehicle;
Fig. 3 is a detail diagram of one embodiment of the engine system shown in Fig. 2;
Fig. 4 is a detail diagram of one embodiment of the engine controller shown in Fig. 2; and
Fig. 5 is a diagram of one embodiment of the sensors shown in Fig. 4.

### Description of the Preferred Embodiments

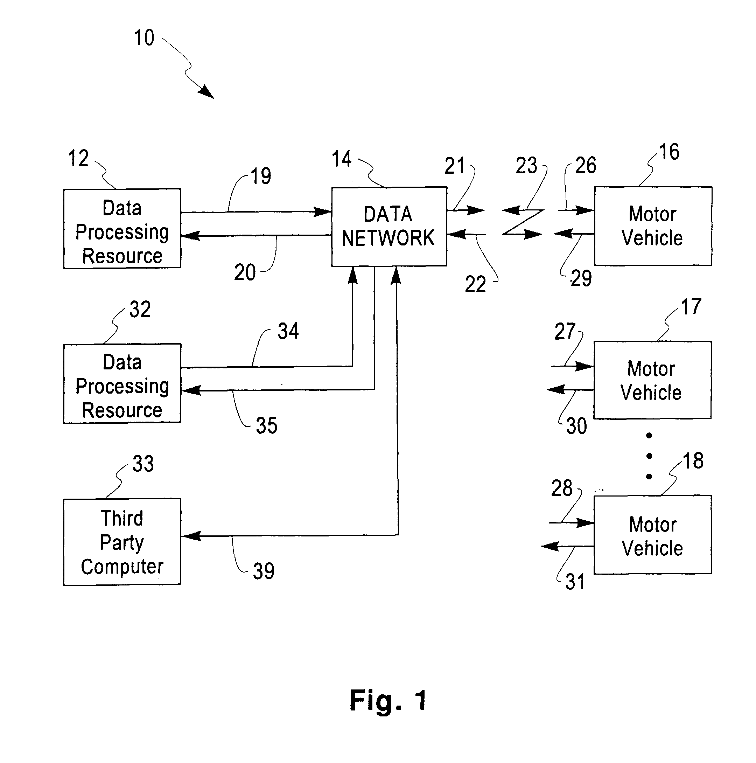

Referring to Fig. 1, a remote cooperative engine control system 10 is shown comprising data processing resources 12 and 32, third party computer 33, data network 14, and motor vehicles 16-18. Data processing resource 12 is coupled over leads 19 and 20 to data network 14. Data processing resource 12 is remote with respect to motor vehicles 16-18 and either contains or has access such as via data network 14 to engine performance data with respect to motor vehicles 16-18. Data network 14 may include the internet, the World wide web, or any data network capable of relaying data to and from data processing resource 12 from motor vehicles 16-18.

Data network 14 may include appropriate transmitters and receivers to convey rf, microwave, infra-red or visible signals to and from motor vehicles 16-18. For example, data network 14 may have an output port over lead 21 and an input port over lead 22 and may include data links. Arrow 23 shows rf signals between data network 14 and motor vehicles 16-18 over leads 26-31. Additional data processing resource 32 may be coupled over leads 34 and 35 to data network 14. Data processing resource 32 may provide additional data to processing resource 14 such as geographical and topographical data; weather such as rain, sleet, snow, temperature, pressure; air pollution standards and present levels such as for ozone and nitrogen oxides etc as well as projected air pollution levels and weather.

Third party computer 33 which may be for example, a personal computer is coupled over lead 39 to data network 14. One or more third parties may send control and data signals over data network 14 to data processing resources 12 and 32 and to motor vehicles 16-18.

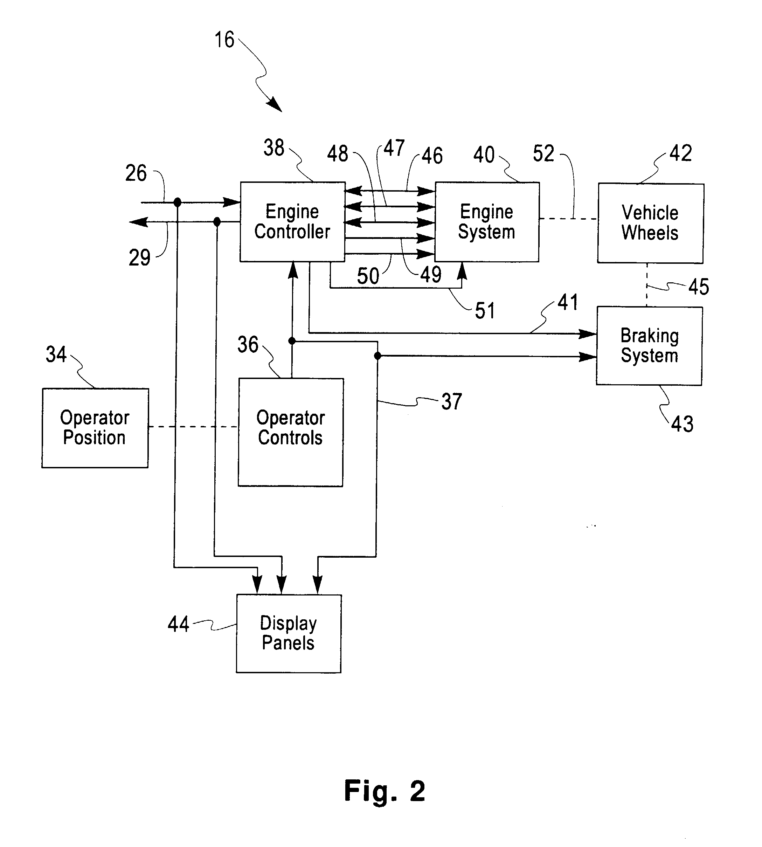

Referring to Fig. 2, motor vehicle 16 includes an operator position 34 for manually operating controls, operator controls 36 for generating control signals in response to an operator, engine controller 38 for generating data and control signals, engine system 40, vehicle wheels 42, braking system 43 and display panel 44. Operator controls 36 function to generate electrical data and control signals which are coupled over lead 37 to an input of engine controller 38, to braking system 43 and to display panel 44. Display panel 44 may display all or less than all of the signals on lead 37. Engine controller 38 sends first data signals over lead 29 to data processing resource 12 and display panel 44 and receives first control signals over lead 26 from data processing resource 12. Lead 26 is also coupled to display panel 44.

Engine controller 38 functions to mathematically combine first control signals over lead 26 with operator control signals over lead 37 to form second control signals which are provided over leads 46-50 to engine system 40. Alternately, in place of or in conjunction with the step of mathematically combining, a look up table may be used to provide second control signals.

Engine controller 38 may generate a brake control signal for applying or releasing the brakes. The brake control signal is coupled over lead 41 to a control input of braking system 43 which may be an automatic braking system (ABS).

Engine system 40 which includes the engine and transmission is mechanically coupled to motor vehicle wheels 42 (either two or four drive wheels) via mechanical link 52 which normally includes one or more axles. Braking system 43 is mechanically coupled to motor vehicle wheels 42 via mechanical link 45 which applies movement to respective brake shoes.

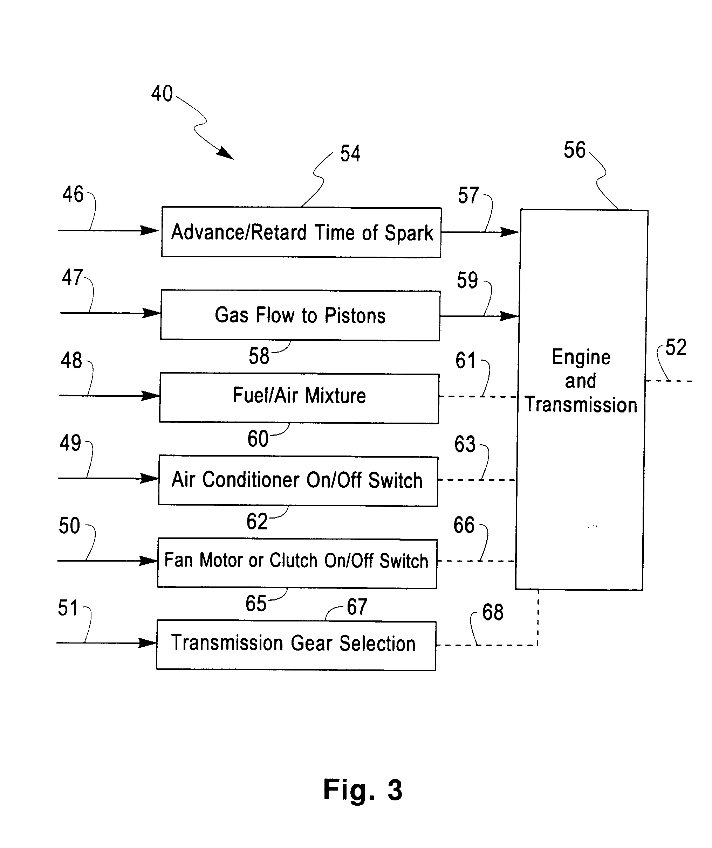

Fig. 3 is a detail diagram of one embodiment of engine system 40 shown in Fig. 2. Lead 46 couples signals to and from advance/retard spark 54. Advance/retard spark 54 functions to control the spark timing of sparks in respective pistons of engine 56 sent via wires and spark plugs 57.

Lead 47 couples signals to and from gas flow to pistons 58. Gas flows over conduit 59 to engine 56 such as to individual pistons via fuel injectors or via a gas line to a carburetter. Lead 48 couples signals to and from fuel/air mixture 60 which is coupled to engine 56 via actuator link 61. Lead 49 is coupled to air conditioner on/off switch 62 i.e. the compressor which is mechanically coupled to engine 56 via a mechanical link 63 which may be a pulley and belt. Lead 50 is coupled to fan motor or clutch on/off switch 65 which may be electrically driven or mechanically coupled to engine 56 via a mechanical link 66 which may be pulley and belt. Lead 51 is coupled to transmission gear selection 67 which may switch gears via mechanical link 68.

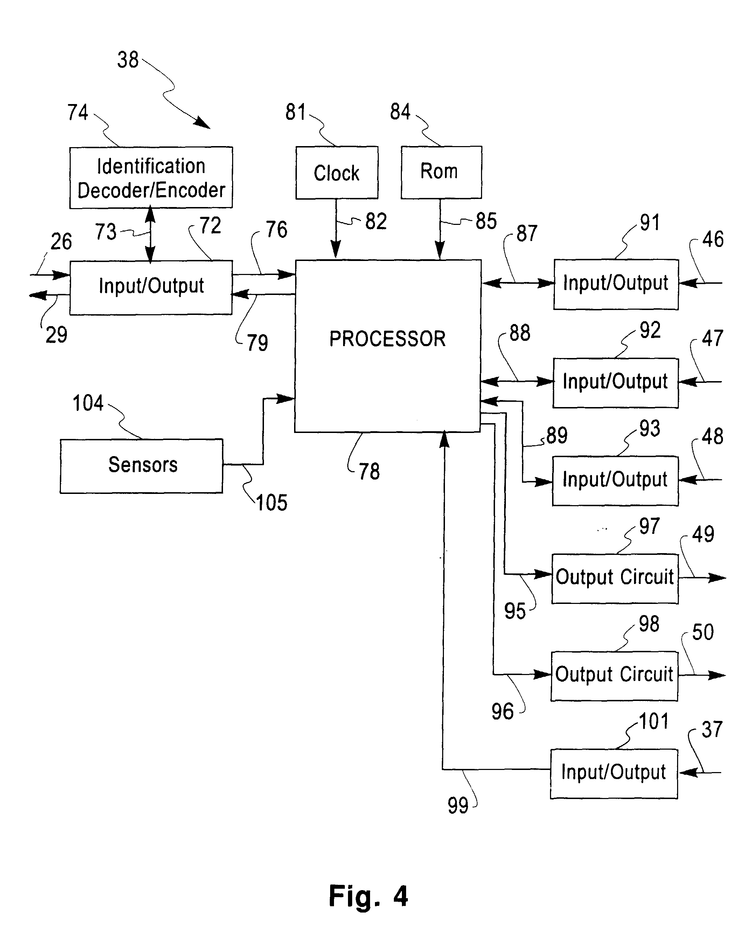

Fig. 4 is a detailed diagram of one embodiment of engine controller 38 shown in Fig. 2. First control signals on lead 26 from data network 14 are coupled to an input of input/output 72. An output of input/output 72 is coupled over lead 29 to data network 14. Input/output 72 couples first control signals and first data signals over lead 73 to identification decoder/encoder 74 which functions to decode first control signals directed to motor vehicle 16. Identification decoder/encoder 74 may hold a unique multibit word for identification of vehicle 16. Identification decoder/encoder 74 functions to encode outgoing first data signals on lead 29 with the unique multibit word for associating the first data signals with motor vehicle 16. Decoded first control signals are coupled over lead 76 to an input of processor 78 which stores and processes the signals. First data signals are formatted by processor 78 and coupled over lead 79 to an input of input/output 72. First data signals are encoded by identification decoder/encoder 74 and coupled to lead 29 for transfer over data network 14.

A real time clock 81 is coupled over lead 82 to an input of processor 78. A read only memory (ROM) 84 is coupled over lead 85 to an input of processor 78. ROM 84 functions to hold initial startup control signals and other operating control signals and data with respect to the engine in motor vehicle 16. These control signals may be provided to engine system 40 at times data network 14 is not available or may be used with or in combination with first control signals from data network 14.

Processor 78 couples third control signals to and receives data signals over leads 87-89 from input/output 91-93 respectively which in turn has a port coupled to leads 46-48 respectively. Processor 78 couples third control signals over leads 95 and 96 to output circuit 97 and 98 which in turn has a port coupled to leads 49 and 50 respectively. Output circuits 97 and 98 may include a digital to analog converter for sending analog or shift registers for sending digital signals. Input/output 91-93 may include a digital to analog converter and a digital to analog converter for sending and receiving analog signals or shift registers for sending and receiving digital signals.

Processor 78 is coupled over lead 99 to input/output 101 which in turn is coupled to lead 37 for receiving data and control signals from operator controls 36 shown in Fig. 2. Operator control signals may include gear shift position, clutch position, brake pedal position and/or pressure, gas pedal position, headlight switch position and ignition switch position i.e. start, on and off.

Sensors 104 shown in Fig. 4 are coupled over lead 105 to processor 78. Sensors 104 function to provide measured data to processor 78 such as engine temperature, engine revolutions per minute (RPM), exterior ambient air temperature etc.

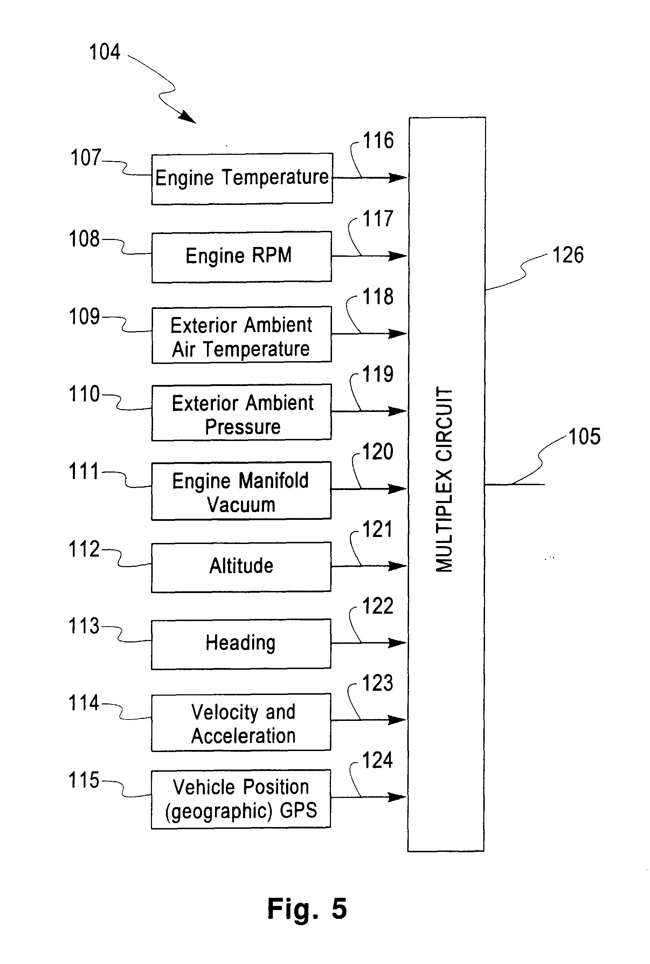

Referring to Fig. 5, sensors 104 is shown in more detail than shown in Fig. 4. A plurality of sensors 107-115 are coupled over leads 116-124 to an input of multiplex circuit 126. Multiplex circuit 126 has an output on lead 105. Sensor 107 measures engine temperature. Sensor 108 measures engine RPM. Sensor 109 measures exterior ambient air temperature. Sensor 110 measures exterior ambient pressure. Sensor 111 measures engine manifold vacuum. Sensor 112 measures altitude of motor vehicle 16. Sensor 113 measures the heading of motor vehicle 16. Sensor 114 measures the velocity and acceleration of motor vehicle 16. Sensor 115 measures the motor vehicle position (geographic) of motor vehicle 16. Sensor 115 may include for example a global position system which is available to consumers such as boaters and hikers.

Referring to Fig. 2, display panel 44 may display information and messages valuable or of interest to the motor vehicle operator such as speed, mileage, fuel, engine temperature, and battery charging.

Sensor 115 is very important because with motor vehicle position data and heading data, the specific road and location on the road may be determined or estimated. with a road determined, data may be made available on hills up and hills down, turns, curves, cross roads, intersections, traffic lights and stop signs. A stop sign requires the motor vehicle to decelerate to stop at the stop sign. A traffic light may require such a stop. Further, accident history data may be factored in by data processing resource 12 in the generation of first control signals. Also, weather conditions may be factored in by data processing resource 12 in the generation of first control signals.

In operation of remote cooperative engine control system 10 shown in Fig. 1, motor vehicles 16-18 may be treated individually and may receive unique first control signals. Certain first control signals may be sent globally to motor vehicles 16-18 in a particular geographic region. Remote cooperative engine control system 10 provides first control signals via remote data processing resources including one or more computer programs. First control signals may be transparent to the motor vehicle operator. First control signals may be sent by remote data processing resources 12 and 32 over a data network in real time or updated periodically. For example long periods of motor vehicle idling or cruising may not need an update or change of first control signals. Thus as an operator drives a motor vehicle, conditions change due to traffic, terrain, vehicle warmup, motor vehicle velocity, motor vehicle acceleration, etc. As these conditions change there may be opportunities for adjusting control signals to engine 56. First control signals may be rejected by the operator or blended with operator control signals so that operator operation of the motor vehicle is not frustrated except in certain circumstances where a third party such as a parent or business elects to over ride operator controls with firm limits on engine 56 performance and hence firm limits on motor vehicle velocity and acceleration. First control signals even when combined with operator control signals can limit the performance of engine 56 and hence the performance envelope of a selected motor vehicle either at the option of an operator about to encounter difficult road conditions such as snow, rain or ice or by a third party such as a parent or business with regard to a delivery vehicle or rental car or truck. The performance envelope of a vehicle such as its velocity and acceleration may be tailored to a variety of conditions and may be progressive or incrementally set. The braking system 43 may also be incorporated into remote cooperative engine control system 10 to provide timely deceleration to stop at a stop sign or traffic light or to limit the velocity of a motor vehicle.

Remote cooperative engine control system 10 may be used to correlate first data signals from a plurality of motor vehicles at remote data processing resource 12 to provide traffic information in real time.

Remote cooperative engine control system 10 may be used to correlate first data signals from a single motor vehicle with other motor vehicle data at remote data processing resource 12 to identify driving patterns of operators driving under the influence of alcohol or drugs. For example, persons driving under the influence of alcohol in addition to weaving from side to side on the road tend to speed up and slow down independent of the road conditions rather than maintain an appropriate speed for the road conditions.

Remote cooperative engine control system 10 also may assess via data processing resources 12 and 32 the likelihood of a motor vehicle accident or crash as well as an engine breakdown by the first data signals and the circumstances of the motor vehicle such as heading, deceleration, location with respect to an anticipated destination etc. For example a traffic jam would have other cars in similar circumstances or moving slowly or accelerating together where an accident would have certain cars moving with respect to the motor vehicles involved in an accident which are normally stopped at the accident scene.

As a vehicle warms up after initial starting, the first control signals and the operator control signals may be combined to provide third signals to engine 56 such as air/fuel mixture to minimize in real time emissions of unwanted pollutants such as ozone and compounds of nitrogen such as nitrogen oxides.

While specific examples have been given, it is believed that once a remote cooperative engine control system is in place to provide and receive signals from a plurality of motor vehicles, respectively, that due to the lower cost of remote computing services and the scope of remote computing services compared to the cost of on-board computer capability, a new data processing paradigm in automobile operation is feasible where the engine is controlled by computer generated control signals combined with operator control signals to allow new objectives to be obtained such as optimum engine control, fuel economy, safe driving, pollution control as a function of geographic location etc.

An apparatus and method for controlling the engine performance of a plurality of automobiles or motor vehicles is described incorporating a remote data processing resource, a data network, a first transmitter, a first receiver, and motor vehicles having an engine controller responsive to control signals from the data network via a second receiver and from an operator in the vehicle. The invention overcomes the problem of adapting engine control to various operating conditions to optimize engine performance for speed, fuel economy and reduced emissions to comply with emission standards.

## Claims

1. An Apparatus for cooperatively controlling the engine performance of one or more motor vehicles having respective engines comprising:
a remote data processing resource having engine data for each of said one or more motor vehicles coupled to a data network for receiving first data signals from said one or more motor vehicles and for generating first control signals for respective ones of said one or more motor vehicles,
said remote data processing resource responsive to said received first data signals for generating said first control signals for respective ones of said one or more motor vehicles,
said data network operable for conveying said first control signals to said one or more motor vehicles, respectively, said data network operable for receiving first data signals from said one or more vehicles, respectively,
each of said one or more motor vehicles having an engine controller for controlling said engine,
said engine controller of each motor vehicle responsive to second control signals from an operator in said motor vehicle and to said received first control signals to generate third control signals for controlling said engine.

2. The apparatus of claim 1 wherein each motor vehicle has an identification code and wherein said first data signals and said first control signals carry said identification code for a respective motor vehicle.

3. The apparatus of any preceding claim wherein each motor vehicle reports an estimate of its position via said first data signals.

4. The apparatus of any preceding claim wherein said remote data processing resource includes data on engine emission requirements for air quality standards for motor vehicles as a function of geographic location and generates first control signals as a function of said first data signals designed to operate said engine within said engine emission requirements.

5. The apparatus of any preceding claim wherein said remote data processing resource includes data on the topological features of the terrain said motor vehicle is expected to traverse and generates first control signals designed to operate said engine as a function of said topological features and said first data signals.

6. The apparatus of any preceding claim further including an operator input panel for indicating additional data indicative of the operators preference for desired engine performance.

7. The apparatus of any preceding claim wherein said data processing resource is receptive to second data signals from persons outside said vehicle for altering said first control signals.

8. The apparatus of any preceding claim wherein said data processing resource over-rides certain of said second control signals from said operator.

9. Apparatus for controlling the engine performance of a motor vehicle comprising:
a remote data processing resource coupled to a data network for receiving and sending first data signals and first control signals,
a motor vehicle having an engine, an electronic engine controller for controlling said engine,
said electronic engine controller coupled to said data network and responsive to said first control signals and second control signals from an operator of said motor vehicle for operating said engine.

10. A vehicle comprising:
an engine having a plurality of electrical/mechanical controls and having a plurality of output signals indicative of present engine operating conditions,
a data processor coupled to said electrical/mechanical controls for controlling said engine,
a data link for coupling said output signals over said data link and for receiving control signals over said data link.

11. A method for operating an engine in a motor vehicle comprising the steps of:
sending data signals from said motor vehicle with respect to said operating conditions of said engine over a data network to a remote data processing resource,
obtaining performance information on said respective engine at said remote data processing resource,
generating first control signals at said remote data processing resource in response to said data signals and said obtained performance information and sending said first control signals over said data network to an engine controller in said motor vehicle,
combining said first control signals with operator control signals to generate second control signals suitable to control said engine, and
controlling said engine with said second control signals.
